# EUROPEAN PATENT SPECIFICATION

(11) **EP 0 646 120 B1**
(45) Date of publication and mention of the grant of the patent: **26.03.1997**
(21) Application number: 93912855.9
(22) Date of filing: 02.06.1993
(51) Int. Cl.: C07F 13/00, C11D 3/39, B01J 31/18

(54) **SYNTHESIS OF MANGANESE OXIDATION CATALYST**
SYNTHESE EINES MANGAN-OXYDATIONS-KATALYSATORS
SYNTHESE D'UN CATALYSEUR D'OXYDATION A BASE DE MANGANESE

(30) Priority: 18.06.1992 US 900861
(43) Date of publication of application: 05.04.1995
(73) Proprietor: UNILEVER PLC, London EC4P 4BQ (GB); UNILEVER N.V., 3013 AL Rotterdam (NL)
(72) Inventor: KERSCHNER, Judith Lynne, Ridgewood, NJ 07450 (US); DELPIZZO, Lisa, Bloomfield, NJ 07003 (US)
(74) Representative: Kan, Jacob Hendrik, Dr.
(86) International application number: PCT/EP93/01383
(87) International publication number: WO 93/25562

(56) References cited:
- EP-A- 0 458 397
- EP-A- 0 466 341
- EP-A- 0 522 817
- EP-A- 0 544 491
- J. AM. CHEM. SOC. 1988, K. WEIGHARDT

## Description

The invention relates to a synthesis of a manganese complex useful as a bleach catalyst.

Peroxide bleaching agents have been used for many years in laundry compositions. Such agents are effective in removing stains, such as tea, fruit and wine stains, from clothing at or near the boiling temperatures of the laundry composition. The efficacy of peroxide bleaching agents diminishes sharply when laundry compositions are used at temperatures below 60°C.

It is known that many transition metal ions catalyse the decomposition of H₂O₂ and H₂O₂-liberating percompounds, such as sodium perborate. It has also been suggested that transition metal salts together with a chelating agent be employed to activate peroxide compounds to render them usable for satisfactory bleaching at lower temperatures. However, not all combinations of transition metals with chelating agents are suitable for improving the bleaching performance of peroxide compound bleaches. Many combinations indeed show no effect, or even an adverse effect, on the bleaching performance. A recent advance in this technology was reporting in European Patent Specification No. 458397. Therein was reported a class of highly active bleaching catalysts in the form of a manganese complex having the general formula:

[LₙMnₘXₚ]^{z}Y_{q}

and especially the species:

[Mn^{IV} ₂(µ-O)₃(Me-TACN)₂](PF₆)₂H₂O

Several of the aforementioned complexes were first synthesised and described by K Wieghardt in the "Journal of the American Chemical Society", 1988, Vol. 110, No. 22, page 7398, as well as in the "Journal of the Chemical Society - Chemical Communications", 1985, page 1145.

The synthesis route as described in the above art involved the reaction, in aqueous medium, of a manganese (III)-compound, e.g. Mn (III)-triacetate, with a nitrogen-containing ligand, e.g. 1,4,7-trimethyl-1,4,7-triazacyclononane, using an ethanol/water mixture as the solvent. A disadvantage of this route is that only low yields of the dinuclear Mn (III)-complex are obtained. Another disadvantage associated with the process of the art is that, owing to the slow crystallisation of the product, long reaction times are necessary. Still another disadvantage is that, besides crystallisation of the desired product, decomposition also seemed to occur, yielding manganese dioxide which contaminates the product. Therefore, a purification process is required when the product is to be converted into the dinuclear Mn (IV)-complex.

More recently there was reported a process for the preparation of manganese complex catalysts, co-pending European Patent Application EP-A-544 491, in which a four-step procedure was outlined. In this procedure a manganese II salt and a ligand L are first reacted to form a manganese coordinated substance. In the second and third step, the substance is oxidised and then basified to a pH of at least 10.5. In the final step the basified reaction mixture is contacted with a further oxidising agent to form the manganese complex catalyst. Yields in the range of 60% range are achieved by this procedure. Improvements in yield and reduction in processing costs would be desirable.

The present invention seeks to provide an improved method for the preparation of manganese (III)- and manganese (IV)-dinuclear complexes of high purity and in high yield.

These and other objects of the present invention will become more readily apparent from the detailed description and examples given hereafter.

Accordingly, the present invention provides a process for the preparation of a manganese complex catalyst having the formula: 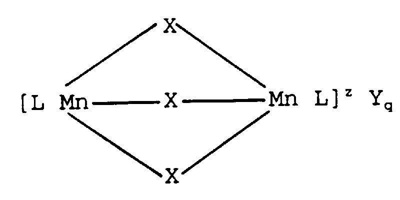 wherein Mn is manganese in a III or IV oxidation state;
each X is independently a coordinating or bridging species selected from:
H₂O, O₂ ²⁻, O²⁻, OH⁻, HO₂ ⁻, SH⁻, S²⁻, SO, Cl⁻, N₃ ⁻, SCN⁻, N³⁻, RCOO⁻, NH₂ ⁻ and NR₃, where R is a radical selected from the group consisting of H, alkyl and aryl radicals;
L is an organic ligand containing at least two nitrogen atoms that coordinate with the Mn; z is an integer ranging from -4 to +4;
Y is a monovalent or multivalent counterion leading to charge neutrality; and
q is an integer from 1 to 4;
the process comprising the steps of:
i) reacting, in an aqueous medium a manganese (II) salt with the ligand L or a precursor thereof to form a manganese coordinated substance, a counterion salt M_{z}Y_{q} being present wherein M is selected from the group consisting of metallic, ammonium and alkanolammonium ions; and
ii) oxidising the manganese coordinated substance with an oxidising agent while simultaneously maintaining a pH of at least 12 to thereby form the manganese complex catalyst.

It has been found that high yields of dinuclear manganese complexes of relatively high purity can be obtained at a much shorter reaction time and essentially, in a single pot reaction through the use of simple manganese (II) inorganic salts.

The counterion Y needed for charge neutrality of the complex is generally provided by carrying out the complexation reaction in the presence of a counterion-forming salt. Though the type of the counterion-forming salt, e.g. chlorides; sulphates; nitrates; methylsulphates; surfactants such as alkyl sulphates, alkyl sulphonates, alkylbenzene sulphonates, tosylates, trifluoro-methyl sulphonates; perchlorates; NaBH₄; and KPF₆, is not critical for the conversion, some salts are more preferred than others in terms of product properties and/or safety. For example, small counterions will produce oily liquids. Perchlorates are potentially explosive and could become a severe hazard upon large-scale preparation. Preferred counterions are the large molecules from surfactants, especially tosylate. A particularly preferred counterion is PF₆ ⁻, which is conveniently obtained from KPF₆. Dinuclear manganese (III) and manganese (IV) complexes having PF₆ ⁻ as the counterion, are solid crystalline products which are easy to handle and to form into a granulated catalyst product. A most preferred counterion is sulfate.

Suitable and preferable ligands for use in the present invention are those which contain three nitrogen atoms all of which coordinate to one of the manganese centers. Preferably the ligand is also macrocyclic in nature.

The nitrogen atoms in the ligand can be part of not only tertiary, secondary or primary amine groups, but also of aromatic ring systems, e.g. pyridines, pyrazoles, etc. or combinations thereof.

Examples of the most preferred ligands are those having the following structures:

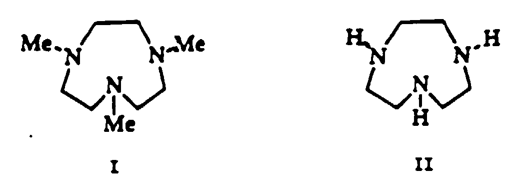

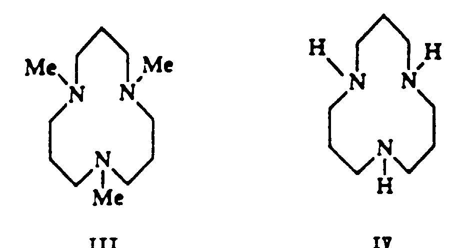

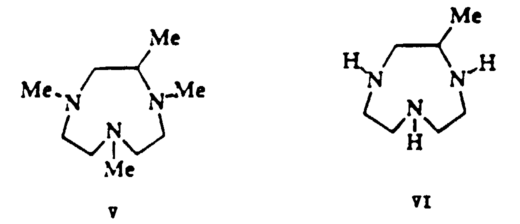

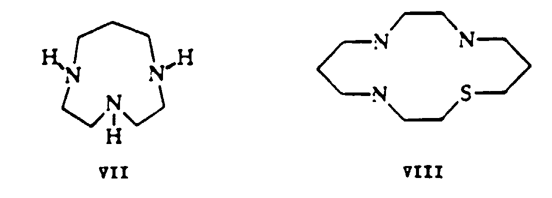

The most preferred ligands are ligands I-V, with I being particularly preferred.

Ligand (I) is 1,4,7-trimethyl-1,4,7-triazacyclononane, coded as 1,4,7-Me₃-TACN; ligand (II) is 1,4,7-triazacyclononane, coded as TACN; ligand (III) is 1,5,9-trimethyl-1,5,9-triazacyclododecane, coded as 1,5,9-Me₃-TACD; ligand (IV) is 2-methyl-1,4,7-trimethyl-1,4,7-triazacyclononane, coded as 2-Me,1,4,7-Me₃ TACN; and ligand (V) is 2-methyl-1,4,7-triazacyclononane, coded as 2-Me-TACN.

Any of these complexes, either performed or formed in situ during the washing process, are useful catalysts for the bleach activation of peroxy compounds over a wide class of stains at lower temperatures, i.e. below 60°C, in a much more effective way than the Mn-based catalysts of the art hitherto known. Furthermore, these catalysts exhibit high stability against hydrolysis and oxidation, even in the presence of oxidants such as hypochlorite.

Manganese complexes which are the object of the present synthesis and which are particularly preferred are those in which each X is O²⁻ and which have the following structures:

[LMn(IV) (µ-O)₃Mn(IV)L]^{z} Y_{q}

wherein L, Y, q and z are as described above.

Specifically preferred is a complex of the structure: 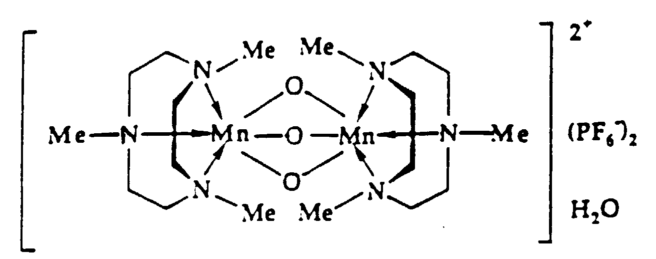 abbreviated as [Mn^{IV} ₂(µ-O)₃(1,4,7-Me₃-TACN)₂](PF₆)₂H₂O.

A particular advantage of the process according to the invention is that it can be performed in a single reactor without isolation of any intermediate products as was previously required.

The first step of the process involves reacting a manganese (II) salt with a ligand L in the presence of a counterion salt M_{z}Y_{q}. Suitable as manganese (II) salts are manganese chloride, manganese sulphate, manganese bromide and manganese nitrate, with the manganese chloride being preferred.

The molar ratio of manganese (II) salt to ligand may range anywhere from 4:1 to 1:2, preferably from about 2:1 to about 1:1, and most preferably about 1.5:1 to 1:1. Relative molar ratios of the manganese (II) salt to the counterion salt will range from about 4:1 to 1:4, preferably from about 2:1 to about 1:2, and most preferably between about 1:1 and 1:2. In the second and final step of the process of the invention, the manganese coordinated substance formed in the first step is oxidised. Oxidation can be performed with air, pure oxygen, hydrogen peroxide, potassium permanganate or any combination thereof. Most preferred as an oxidising agent is aqueous hydrogen peroxide or solid sodium peroxide.

In the second step of the reaction the reaction medium must be held at a pH of at least 12 and preferably is at least 12.5. Sodium hydroxide is the preferred basifying agent. It is important that the reaction mixture of the second step simultaneously be provided with both the oxidising and the basifying agents. Only under such conditions will high and reproducible yields be achieved.

Advantageously, upon reaction completion the resultant mixture is quenched by lowering the pH to pH 9 or below, preferably between pH 7 and 9. Decomposition of the desired manganese complex catalyst is thereby avoided.

For purposes of the process of this invention, there need be no isolation of any coordinated manganese intermediates. In fact, isolation of a coordinated manganese intermediate may have an adverse effect. Further, for purposes of the invention, it is advantageous to employ a protic solvent system. Particularly useful is a combination of a C₁-C₄ alkanol and water in a ratio of about 10:1 to 1:10, preferably 4:1 to 1:1, and most preferably about 2:1. The preferred alkanol is ethanol.

With the process of the invention it is no longer necessary nor desirable that a preliminary oxidation is carried out between formation of a manganese coordinated substance and before basification. In the process of the present invention, the intermediate oxidation step is eliminated and basification and oxidation is performed concurrently in a single final step.

The following examples will more fully illustrate the embodiments of this invention. All concentrations presented are by weight unless otherwise indicated.

### EXAMPLES

### Example 1

### Synthesis of Mn₂ (1,4,7-Me₃TACN)₂(µ-O)₃(PF₆)₂ via Mn(II) Salts and Sodium Peroxide

In a 2L round-bottom flask was dissolved 18.4g MnCl₂ (0.146 mole) in 1000 ml ethanol/water (67:33). To the resultant solution, under agitation, was added 25g 1,4,7⁻Me₃TACN (0.146 mole) and 26g NaPF₆ (0.156 mole). This solution was stirred at room temperature for 20 minutes and then chilled to about 5°C in an ice bath. To the chilled solution, whilst maintaining stirring, was slowly added (over 3 minutes) 10.75g of solid sodium peroxide (0.146 mole). The pH of the solution was greater than 12. After complete addition of the sodium peroxide, the reaction mixture was stirred, whilst surrounded by an ice bath, for one hour and then warmed to room temperature. The mixture was then stirred at room temperature for an additional 45 minutes. Finally, the pH of reaction mixture was lowered to pH 8-9 with 1.2N sulfuric acid. The resulting mixture was then filtered through a medium porosity glass frit to remove manganese by-product and washed with water until the filter pad rinsed colourless (to remove any red precipitated Mn(IV) product). The cherry red coloured solution was then concentrated to 1/10 of the original solvent volume causing crystallisation of the product. This concentrated solution was filtered and the red crystalline product was washed with ethanol (25 ml) and dried under vacuo. Yield was 34.8g Mn(IV)₂1,4,7-(Me₃TACN)₂(µ-O)₃(PF₆)₂ H₂O (Purity = 97%).

### Example 2

### Synthesis of Mn₂ (1,4,7-Me₃TACN)₂(µ-O)₃(PF₆)₂ via Mn(II) Salts and Hydrogen Peroxide

In a 2L round bottomed flask was dissolved 11,1g MnCl₂ (0.088 mol) in 600 ml ethanol/water (67:33). To this solution, whilst stirring, was then added 15g 1,4,7-Me₃TACN (0.088 mole) and 17.5g KPF₆ (0.095 mole). This solution was stirred at room temperature for 20 minutes and then chilled to about 5°C in an ice bath. To the chilled solution, whilst stirring, was added one mole equivalent hydrogen peroxide (3%) and 1.5 mole equivalent sodium hydroxide (20% aqueous solution). This corresponds to adding a mixture of 99ml of hydrogen peroxide (3%) and 26.3ml sodium hydroxide (20% solution) to the reaction mixture. The pH of the resulting solution was greater than 12. After complete addition of the peroxide premix, the resultant reaction mixture was stirred whilst surrounded by an ice bath for one hour and then warmed to room temperature. The mixture was stirred at room temperature for an additional 45 minutes. Finally, the pH of the reaction mixture was lowered to pH 8-9 with 1.2N sulphuric acid and filtered through a medium porosity glass frit to remove manganese by product. It was then washed with water until the filter pad rinsed colourless (to remove any red precipitated Mn(IV) product). The cherry red coloured solution was then concentrated to 1/10 the original solvent volume causing crystallisation of the product. This concentrated solution was then filtered and the red crystalline product was washed with ethanol (25 ml) and dried under vacuo. Yield was 25.8g Mn(IV)₂(1,4,7-Me₃TACN)₂(µ-O)₃(PF₆)₂H₂O (Purity = 97%).

### Example 3

### Comparison of Various Oxidising Agents

Various combinations of oxidising agents were used to prepare Mn₂(1,4,7-Me₃TACN)₂(µ-O)₃(PF₆)₂ and the results of these preparations are recorded in the following table. The first three entries were performed via two oxidation steps. The first oxidation was performed at pH 7. Thereafter, the pH was raised to greater than 10.5 with triethyl amine whereupon the second oxidation was performed. The last two entries report results from Examples 1 and 2.

| OXIDIZING AGENT | | PURITY | YIELD | RXN. TIME |
|---|---|---|---|---|
| 1st Step | 2nd Step | | | |
| O₂ | O₂ | 38% | 39% | 5 hrs. |
| KMnO₄ | KMnO₄ | 70% | 50% | 3 hrs. |
| H₂O₂ | O₂ | 70% | 60% | 3 hrs. |
| Na₂O₂ | (one step) | 100% | 72% | 2 hrs. |
| H₂O₂/NaOH | (one step) | 100% | 74% | 2 hrs. |

### Example 4

The synthesis of Mn₂ (1,4,7-Me₃TACN)₂(µ-0)₃(PF₆)₂ can be performed with a variety of Mn(II) salts. Results obtained with two Mn(II) compounds are shown in the following table.

| Starting Material | Purity | Yield |
|---|---|---|
| MnCl₂ | 100% | 74% |
| MnSO₄ | 90% | 65% |

### Example 5

Simultaneous addition of the base and peroxide has been found to produce higher yields of the desired product than sequential addition of the two reactants. As shown in the following table, addition of sodium peroxide or a NaOH/H₂O₂ mixture (pH greater than 12) gave more product than addition of H₂O₂ followed by addition of NaOH (pH greater than 12) or vice versa.

| | Purity | Yield |
|---|---|---|
| 1. Addition of H₂O₂ the NaOH | 55% | <40% |
| 2. Addition of NaOH then H₂O₂ | -- | <10% |
| 3. Addition of H₂O₂/NaOH mixture | 100% | 74% |
| 4. Addition of sodium peroxide | 100% | 72% |

## Claims

1. A process for the preparation of a manganese complex catalyst having the formula: 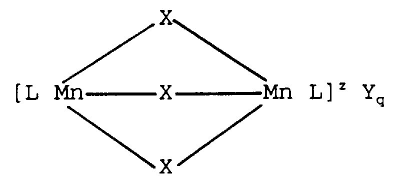 wherein Mn is manganese in a III or IV oxidation state;
each X is independently a coordinating or bridging species selected from H₂O, O₂ ²⁻, O²⁻, OH⁻, HO₂ ⁻, SH⁻, S²⁻, SO, Cl⁻, N₃ ⁻, SCN⁻, N³⁻, RCOO⁻, NH₂ ⁻ and NR₃, where R is a radical selected from the group consisting of H, alkyl and aryl radicals;
L is an organic ligand containing at least two nitrogen atoms that coordinate with the Mn;
z is an integer ranging from -4 to +4;
Y is a monovalent or multivalent counterion leading to charge neutrality; and
q is an integer from 1 to 4;
the process comprising the steps of:
i) reacting, in an aqueous medium a manganese (II) salt with the ligand L or a precursor thereof to form a manganese coordinated substance, a counterion salt M_{z}Y_{q} being present wherein M is selected from the group consisting of metallic, ammonium and alkanolammonium ions; and
ii) oxidising the manganese coordinated substance with an oxidising agent, while simultaneously maintaining a pH of at least 12, to thereby form the manganese complex catalyst.

2. A process according to claim 1 wherein the pH of the reaction medium in step ii) is at least 12.5.

3. A process according to claim 1 wherein the oxidising agent is selected from the group consisting of hydrogen peroxide and sodium peroxide.

4. A process according to claim 1 wherein the basifying agent used to achieved the pH of the reaction medium in step ii) is sodium hydroxide.

5. A process according to claim 1 wherein the manganese complex has the formula [LMn(IV) (µ-O)₃Mn(IV)L]^{z}Y_{q}.

6. A process according to claim 1 wherein the manganese complex has the formula [Mn^{IV} ₂(µ-O)₃(1,4,7 -Me₃-TACN)₂] (PF₆)₂H₂O.

7. A process according to claim 1 wherein the manganese complex has the formula [Mn^{IV} ₂(µ-O)₃(1,4,7-Me₃-TACN)₂](SO₄).

8. A process according to claim 1 wherein subsequent to step (ii) and formation of the manganese complex catalyst, the pH of the reaction medium is quenched by lowering the pH to pH 9 or below and thereafter the catalyst is separated as a solid from the reaction medium.

9. A process according to claim 1 wherein the molar ratio of the manganese (II) salt to the ligand L is in the range 4:1 to 1:2.

10. A process according to claim 1 wherein the molar ratio of the manganese (II) salt to the counterion salt is in the range 4:1 to 1:4.

## Patentansprüche

1. Verfahren zur Herstellung eines Mangankomplexkatalysators der folgenden Formel: 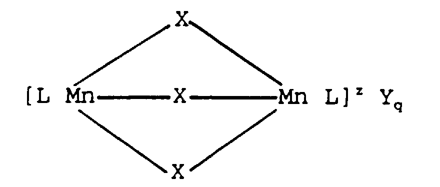 worin bedeuten:
Mn Mangan in der Oxidationsstufe III oder IV;
jeder Rest X unabhängig voneinander eine koordinierende oder verbrückende Spezies, die unter H₂O, O₂ ²⁻, O²⁻, OH⁻, HO₂ ⁻, SH⁻, S²⁻, SO, Cl⁻, N₃ ⁻, SCN⁻, N³⁻, RCOO⁻, NH₂ ⁻ und NR₃, wobei R ein unter H, Alkyl- und Arylresten ausgewählter Rest ist, ausgewählt ist;
L ein organischer Ligand mit mindestens zwei Stickstoffatomen, die sich an das Mn koordinativ anlagern;
z eine ganze Zahl von -4 bis +4;
Y ein einwertiges oder mehrwertiges Gegenion, das zu einer Ladungsneutralität führt, und
q eine ganze Zahl von 1 bis 4;
wobei das Verfahren die folgenden Stufen umfaßt:
i) Umsetzen eines Mangan(II)-Salzes mit dem Liganden L oder einem Vorläufer hiervon in einem wäßrigen Medium unter Bildung einer Mangankoordinationsverbindung, wobei ein Gegenionensalz M_{z}Y_{q} vorhanden ist und wobei M unter Metall-, Ammonium- und Alkanolammoniumionen ausgewählt ist, und
ii) Oxidieren der Mangankoordinationsverbindung mit einem Oxidationsmittel unter gleichzeitigem Aufrechterhalten eines pH-Werts von mindestens 12, wobei der Mangankomplexkatalysator gebildet wird.

2. Verfahren nach Anspruch 1, wobei der pH-Wert des Reaktionsmediums in Stufe ii) mindestens 12,5 beträgt.

3. Verfahren nach Anspruch 1, wobei das Oxidationsmittel unter Wasserstoffperoxid und Natriumperoxid ausgewählt ist.

4. Verfahren nach Anspruch 1, wobei das zur Erreichung des pH-Werts des Reaktionsmediums in Stufe ii) verwendete, basisch machende Mittel Natriumhydroxid ist.

5. Verfahren nach Anspruch 1, wobei der Mangankomplex die Formel [LMn(IV)(µ-O)₃Mn(IV)L]^{z}Y_{q} besitzt.

6. Verfahren nach Anspruch 1, wobei der Mangankomplex die Formel [Mn^{IV} ₂(µ-O)₃(1,4,7-Me₃-TACN)₂](PF₆)₂H₂O besitzt.

7. Verfahren nach Anspruch 1, wobei der Mangankomplex die Formel [Mn^{IV} ₂(µ-O)₃(1,4,7-Me₃-TACN)₂](SO₄) besitzt.

8. Verfahren nach Anspruch 1, wobei nach der Stufe ii) und der Bildung des Mangankomplexkatalysators der pH-Wert des Reaktionsmediums durch Verringern des pH-Werts auf 9 oder darunter gequenscht wird und danach der Katalysator als Feststoff aus dem Reaktionsmedium abgetrennt wird.

9. Verfahren nach Anspruch 1, wobei das Molverhältnis Mangan(II)-Salz/Ligand L im Bereich von 4/1 bis 1/2 liegt.

10. Verfahren nach Anspruch 1, wobei das Molverhältnis Mangan(II)-Salz/Gegenionensalz im Bereich von 4/1 bis 1/4 liegt.

## Revendications

1. Un procédé de préparation d'un catalyseur à base d'un complexe de manganèse présentant la formule : 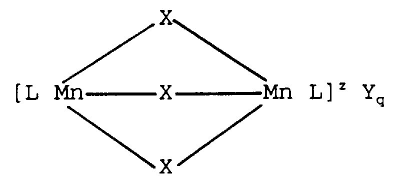 où Mn est du manganèse à un état d'oxydation III ou IV ;
chacun des X est indépendamment une espèce de coordination ou de pontage sélectionnée parmi H₂O, O₂ ²⁻, O²⁻, OH⁻, OH₂ ⁻, SH⁻, S²⁻, SO, CL⁻, N₃ ⁻, SCN⁻, N³⁻, RCOO⁻, NH₂ ⁻ et NR₃, où R est un radical sélectionné parmi le groupe composé de H, de radicaux alkyle et aryle ;
L est un ligand organique contenant au moins deux atomes d'azote qui se coordonnent avec le Mn ;
z est un entier compris entre -4 et +4 ;
Y est un contre-ion monovalent ou multivalent permettant une charge neutre ; et
q est un entier compris entre 1 et 4 ;
le procédé comprenant les étapes consistant à :
i) faire réagir, dans un milieu aqueux, un sel de manganèse (II) avec le ligand L ou un précurseur de celui-ci pour former une substance coordonnée à base de manganèse, un sel de contre-ion M_{z}Y_{q} étant présent, dans lequel M est sélectionné parmi le groupe composé d'ions métalliques, ammonium et alkanolammonium ; et
ii) oxyder la substance coordonnée à base de manganèse avec un agent d'oxydation tout en maintenant un pH au moins égal à 12 pour ainsi former la catalyseur à base de complexe de manganèse

2. Un procédé selon la Revendication 1, dans lequel le pH du milieu de réaction à l'étape ii) est au moins égal à 12,5.

3. Un procédé selon la Revendication 1, dans lequel l'agent d'oxydation est sélectionné parmi le groupe composé de peroxyde d'hydrogène et de peroxyde de sodium.

4. Un procédé selon la Revendication 1, dans lequel l'agent de basification utilisé pour obtenir le pH du milieu de réaction à l'étape ii) est de l'hydroxyde de sodium

5. Un procédé selon la Revendication 1, dans lequel le complexe à base de manganèse présente la formule [LMn(IV)(µ - O)₃Mn(IV)L]^{z} Y_{q}.

6. Un procédé selon la Revendication 1, dans lequel le complexe à base de manganèse présente la formule [Mn^{IV} ₂ (µ - O)₃(1,4,7 - Me₃ - TACN)₂] (PF₆)₂ H₂O.

7. Un procédé selon la Revendication 1, dans lequel le complexe à base de manganèse présente la formule [Mn^{IV} ₂(µ - O)₃(1,4,7 - Me₃ - TACN)₂] (SO₄).

8. Un procédé selon la Revendication 1, dans lequel suite à l'étape (ii) et à la formation du catalyseur à base d'un complexe de manganèse, le pH du milieu de réaction est abaissé brusquement en abaissant le pH à un pH égal à 9 ou inférieur, après quoi le catalyseur est séparé en tant que solide du milieu de réaction.

9. Un procédé selon la Revendication 1, dans lequel le rapport molaire entre le sel de manganèse (II) et le ligand L est compris dans la gamme allant de 4:1 à 1:2

10. Un procédé selon la Revendication 1, dans lequel le rapport molaire entre le sel de manganèse (II) et le sel de contre-ion est compris dans la gamme allant de 4:1 à 1:4.
